# EUROPEAN PATENT SPECIFICATION

(11) **EP 3 247 859 B1**
(45) Date of publication and mention of the grant of the patent: **30.10.2019**
(21) Application number: 15801610.5
(22) Date of filing: 16.11.2015
(51) Int. Cl.: E06B 9/56, E06B 9/60, E06B 9/68, E06B 9/322

(54) **WINDOW SHADE AND CONTROL SYSTEM THEREOF**
FENSTERBLENDE UND STEUERUNGSSYSTEM DAFÜR
STORE DE FENÊTRE ET SON SYSTÈME DE COMMANDE

(30) Priority: 20.01.2015 TW 104101854
(43) Date of publication of application: 29.11.2017
(73) Proprietor: Teh Yor Co., Ltd., Sec. 1, 10418 Taipei, Taiwan (TW)
(72) Inventor: HUANG, Chin-tien, New Taipei City 23743 (TW); YU, Fu-lai, New Taipei City 23743 (TW)
(74) Representative: Epping - Hermann - Fischer
(86) International application number: PCT/US2015/060823
(87) International publication number: WO 2016/118219

(56) References cited:
- EP-A1- 1 637 693
- EP-A2- 2 620 583
- US-A1- 2013 340 951
- US-A1- 2014 144 596

## Description

### BACKGROUND

### 1. Field of the Invention

The present invention relates to window shades, and actuating systems used in window shades.

### 2. Description of the Related Art

Many types of window shades are currently available on the market, such as Venetian blinds, roller shades and honeycomb shades. The shade when lowered can cover the area of the window frame, which can reduce the amount of light entering the room through the window and provide increased privacy. Conventionally, the window shade is provided with an operating cord that can be actuated to raise or lower the window shade. More specifically, a drum may be operably rotated to wind and unwind a suspension cord to respectively raise and lower the shade.

However, the operating cord used in certain traditional window shade may have an excessive length, which affects the outer appearance of the window shade.

Moreover, there is a risk of child strangle on the longer operating cord. To avoid the risk of accidental injuries, some window shades have no operating cord, and an operator can directly adjust the expansion of the window shade by vertically displacing a bottom rail of the window shade. This approach generally uses torsion springs to sustain the weight of the bottom rail, which requires the manufacturer to have a stock of different spring lengths for accommodating different sizes of window shades. The need to have different spring parts may increase the manufacture cost.

US 2013/340951 A1 discloses a control system for a window shade comprising:
a suspension member, a rotary drum affixed with the suspension member and rotatable to wind and unwind the suspension member. A torsion spring having a first and a second end and being operable to bias the rotary drum in rotation for winding the suspension member and a transmission axle disposed through the torsion spring. The transmission axle being rotationally coupled with the rotary drum.

The object of the invention is to adapt affixed working range of the torsion spring to a greater displacement range of the bottom part of the window shade.

This object is solved by the features of the independent claim.

### SUMMARY

The present application describes a window shade and a control system for use with the window shade that can overcome the aforementioned problems of the prior art.

In one embodiment, the control system includes a suspension member, a first and a second casing portion, a rotary drum, a torsion spring, a coupling member, a transmission axle, a central gear, a ring and a plurality of planetary gears. The rotary drum is pivotally connected with the first casing portion and is affixed with the suspension member, the rotary drum being rotatable to wind and unwind the suspension member. The torsion spring is operable to bias the rotary drum in rotation for winding the suspension member, the torsion spring having a first and a second end, the first end being affixed with the second casing portion, and the second end being affixed with a coupling member. The transmission axle is disposed through the torsion spring, and is rotationally coupled with
the rotary drum and the central gear. The ring is affixed with the second casing portion and has a plurality of teeth. The planetary gears are respectively connected pivotally with the coupling member, the planetary gears being respectively meshed with the central gear and the teeth of the ring.

In another embodiment, the control system for a window shade includes a suspension member, a first and a second casing portion, a rotary drum pivotally connected with the first casing portion and affixed with the suspension member, the rotary drum being rotatable to wind and unwind the suspension member, a torsion spring assembled coaxial to the transmission axle and having a first and a second end, a transmission axle passing through the torsion spring and rotationally coupled with the rotary drum, and a speed reducer. The first end of the torsion spring is affixed with the second casing portion, the second end of the torsion spring is connected with the speed reducer, and the torsion spring is operable to bias the rotary drum in rotation for winding the suspension member. The speed reducer is connected with the transmission axle, and includes a plurality of gears configured to convert rotational movement of the transmission axle and the rotary drum to a slower displacement of the second end of the torsion spring.

Advantages of the control system and window shade described herein include the ability to provide a speed reducer operable to adapt a fixed working range of the torsion spring to a greater displacement range of the bottom part, which can solve the problem of insufficient spring length.

### BRIEF DESCRIPTION OF THE DRAWINGS

FIG. 1 is a schematic view illustrating an embodiment of a window shade;
FIG. 2 is top view of the window shade shown in FIG. 1;
FIG. 3 is a schematic view illustrating the window shade of FIG. 1 in a fully lowered or expanded state;
FIG. 4 is a perspective view illustrating an assembly of a winding unit and a spring drive unit used in the window shade shown in FIG. 1;
FIG. 5 is a partial cross-sectional view illustrating the winding unit and the spring drive unit of FIG. 4;
FIG. 6 is an exploded view of the winding unit shown in FIG. 4;
FIG. 7 is an exploded view of the spring drive unit shown in FIG. 4; and
FIG. 8 is a cross-sectional view taken along section 8-8 shown in FIG. 5.

### DETAILED DESCRIPTION OF THE EMBODIMENTS

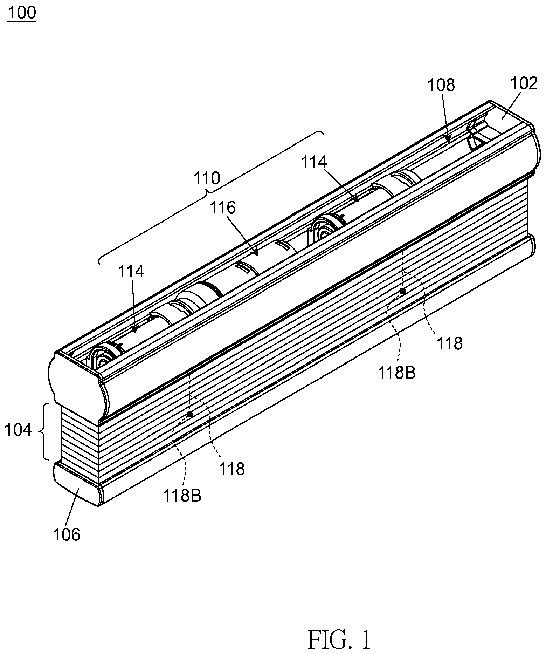

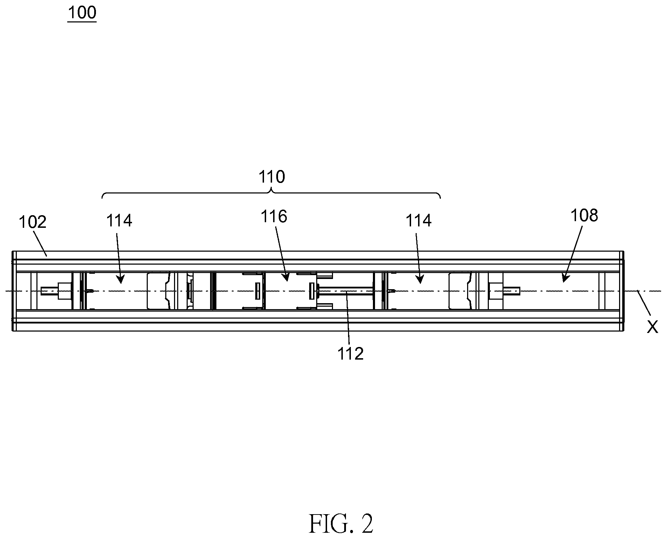

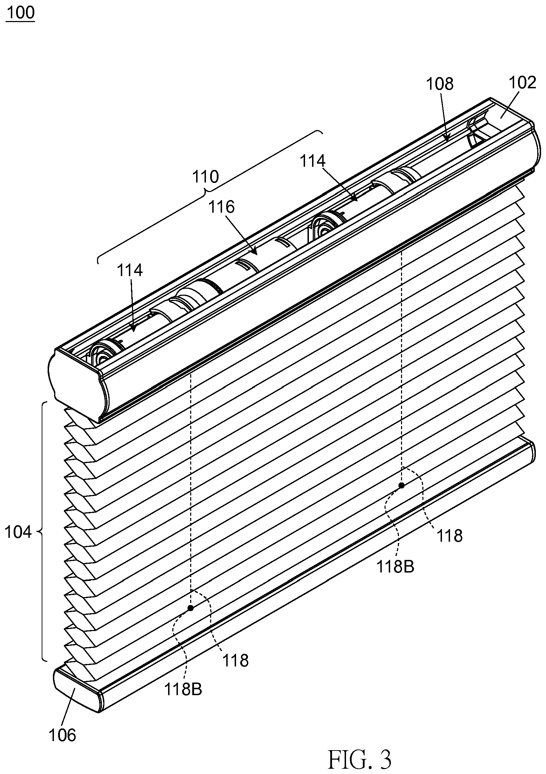

FIG. 1 is a schematic view illustrating an embodiment of a window shade 100, FIG. 2 is a top view of the window shade 100, and FIG. 3 is a schematic view illustrating the window shade 100 in a fully lowered or expanded state. The window shade 100 can include a head rail 102, a shading structure 104 and a bottom part 106 disposed at a lower end of the shading structure 104. The head rail 102 can be of any type, and can have any shape. The head rail 102 can be affixed at an upper region of a window frame, and the shading structure 104 and the bottom part 106 can be suspended from the head rail 102. Moreover, the head rail 102 can have an inner cavity 108 in which is assembled a control system 110. The window shade 100 is a cordless window shade, i.e., it has no operating cords exposed outward, and the expansion and collapse of the window shade 100 can be directly adjusted by manually displacing the bottom part 106 vertically upward and downward. While the bottom part 106 is positioned at any desired height, the control system 110 can apply a biasing force suitable to keep the bottom part 106 of the shading structure 104 stationary.

The shading structure 104 can have any adequate structure. For example, the shading structure 104 can have a honeycomb structure made of a fabric material (as shown), a Venetian blind structure, or multiple horizontal slats distributed vertically.

The bottom part 106 is arranged at a lower end of the window shade 100, and can move up and down relative to the head rail 102 to collapse and expand the shading structure 104. In one embodiment, the bottom part 106 can be an elongated rail. However, the bottom part 106 can be any suitable weight member. In some embodiments, the bottom part 106 can be a lowermost end of the shading structure 104.

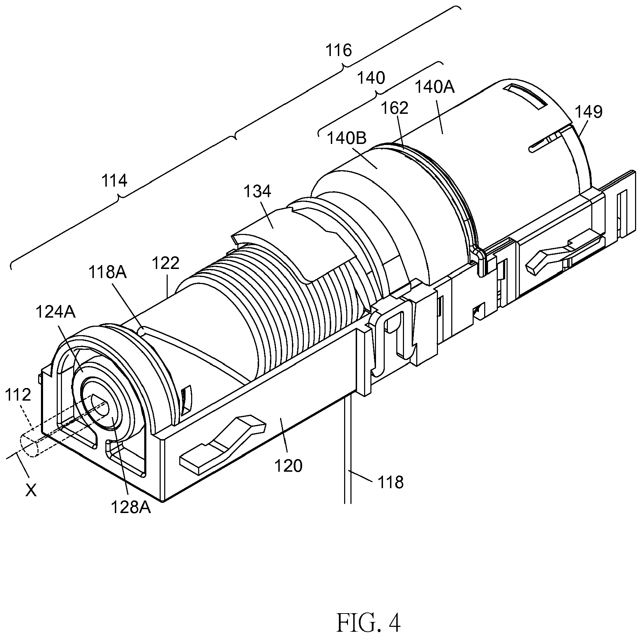

The control system 110 disposed in the head rail 102 can include a transmission axle 112, one or more winding unit 114, one or more spring drive unit 116, and one or more suspension member 118 (shown with phantom lines) respectively coupled with the winding unit 114. In one embodiment, multiple suspension members 118 may be provided as suspension cords extending vertically between the head rail 102 and the bottom part 106. Each of the suspension members 118 can have a first end 118A connected with one corresponding winding unit 114 (as shown in FIG. 4), and a second end 118B connected with the bottom part 106. When the bottom part 106 rises, the winding units 114 can respectively wind the suspension members 118. When the bottom part 106 lowers, the suspension members 118 can respectively unwind from the winding units 114. The transmission axle 112 can extend along a length of the head rail 102 and define a longitudinal axis X, and the winding units 114 and the spring drive units 116 can be axially connected with the transmission axle 112. The spring force applied by each of the spring drive units 116 can be transmitted via the transmission axle 112 to the winding units 114, so that the winding units 114 can be spring-biased in rotation for respectively winding the suspension members 118. Moreover, when the bottom part 106 is placed in a desired position, the spring force of the spring drive units 116, the weight suspended from the suspension members 118 and internal friction forces of the control system 110 can counteract one another to maintain the bottom part 106 stationary.

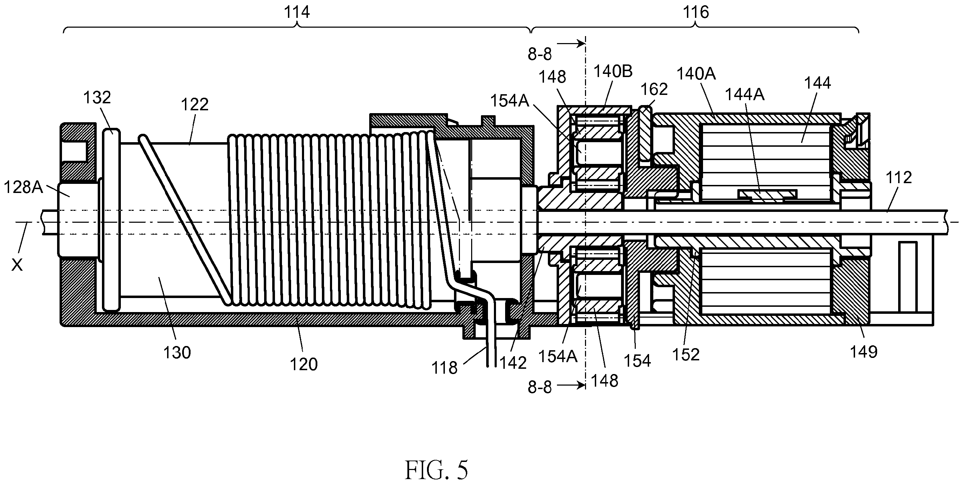

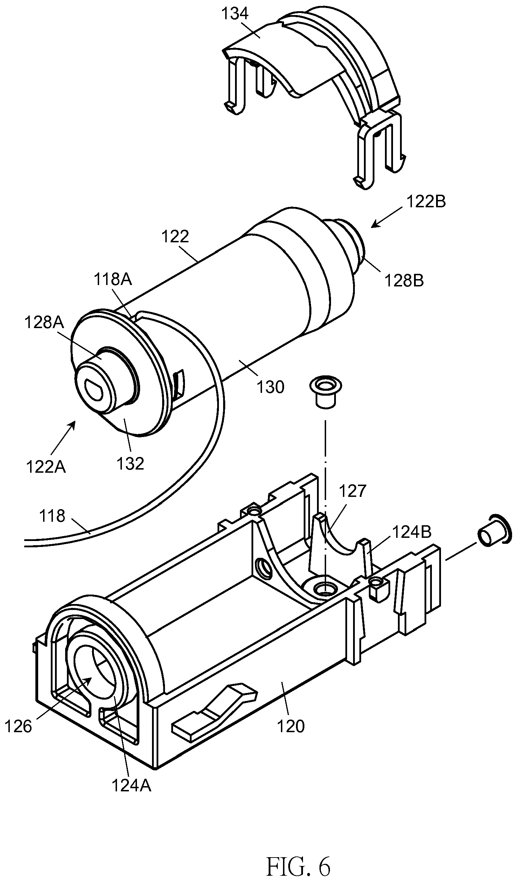

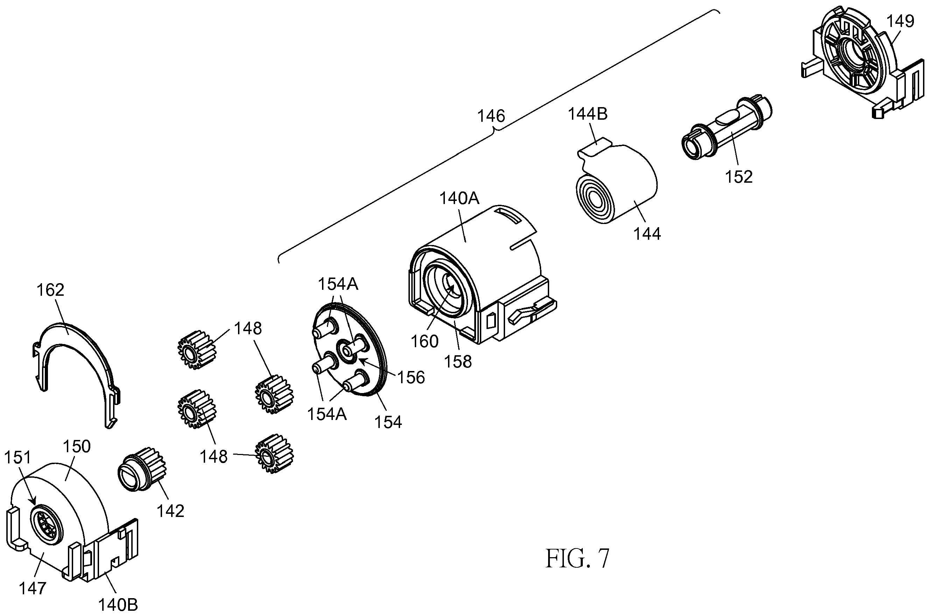

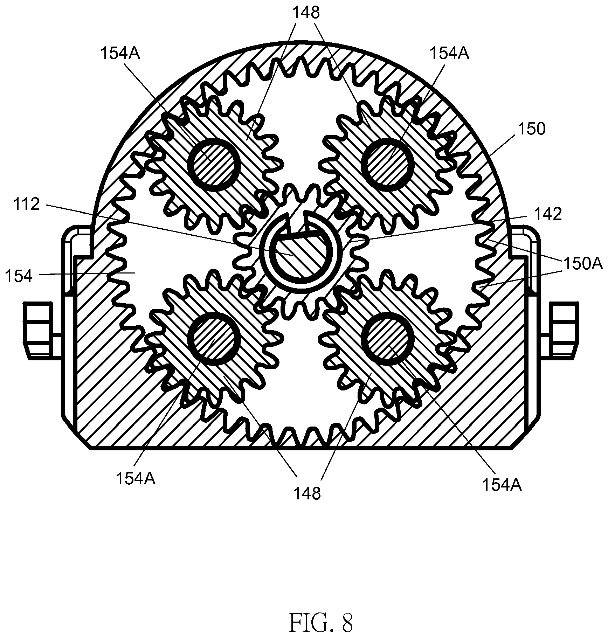

FIG. 4 is a perspective view illustrating an assembly of one winding unit 114 with one spring drive unit 116. FIG. 5 is a partial cross-sectional view illustrating the winding unit 114 and the spring drive unit 116. FIG. 6 is an exploded view of the winding unit 114. FIG. 7 is an exploded view of the spring drive unit 116. FIG. 8 is a cross-sectional view taken along section 8-8 shown in FIG. 5. Referring to FIGS. 4-6, the winding unit 114 can include a casing portion 120 and a rotary drum 122. The casing portion 120 can be affixed in the head rail 102. The casing portion 120 can have a plurality of sidewalls 124A and 124B, the sidewall 124A having a hole 126, and the sidewall 124B being formed with a pivotal support surface 127.

The rotary drum 122 is assembled in the casing portion 120, and can have two opposite sides 122A and 122B respectively provided with projecting shaft portions 128A and 128B. The shaft portion 128A can pass through the hole 126, and the shaft portion 128B can be disposed on the pivotal support surface 127, such that the rotary drum 122 is pivotally connected with the casing portion 120 about the longitudinal axis X. An outer surface 130 of the rotary drum 122 can be adapted to wind one suspension member 118, which can have its first end 118A affixed with the rotary drum 122 near the side 122A thereof. Moreover, a stop ring 132 can be affixed with the rotary drum 122 close to the side 122A, the stop ring 132 abutting the sidewall 124A. The transmission axle 112 extends through the casing portion 120 and an interior of the rotary drum 122, and is rotationally coupled with the rotary drum 122. Accordingly, the rotary drum 122 and the transmission axle 112 can rotate in unison for winding and unwinding the suspension member 118, the suspension member 118 winding around the outer surface 130 of the rotary drum 122 from the side 122B toward the side 122A. Once the rotary drum 122 is disposed in the casing portion 120, an upper cover 134 can affixed with the casing portion 120 to enclose at least partially the rotary drum 122.

Referring to FIGS. 4-8, the spring drive unit 116 can include a casing portion 140, a central gear 142, a torsion spring 144, a coupling member 146, a plurality of planetary gears 148 and a ring 150. The casing portion 140 can be disposed in the head rail 102 adjacent to the casing portion 120, and can be fixedly connected with the casing portion 120 of the winding unit 114. For facilitating assembly, the two casing portions 120 and 140 may be provided as separate parts that can be affixed with each other via fasteners. It will be appreciated, however, that the casing portions 120 and 140 may also be provided as an integral body.

The casing portion 140 can include a spring cavity 140A and a gear cavity 140B that are affixed with each other. The spring cavity 140A can receive the torsion spring 144. The gear cavity 140B can receive the central gear 142 and the planetary gears 148, and a sidewall 147 of the gear cavity 140B can be provided with an opening 151 for passage of the transmission axle 112. As shown, the gear cavity 140B can be arranged between the spring cavity 140A of the casing portion 140 and the casing portion 120 of the winding unit 114 along the longitudinal axis X. When the control system 110 is assembled, the transmission axle 112 respectively extends through the spring cavity 140A and the gear cavity 140B of the casing portion 140.

The ring 150 can be affixed with the gear cavity 140B of the casing portion 140. An inner edge of the ring 150 can have a plurality of projecting teeth 150A distributed around the transmission axle 112.

The central gear 142 is disposed in the gear cavity 140B near the side 122B of the rotary drum 122, passes through the opening 151 of the sidewall 147 and is pivotally connected with the gear cavity 140B of the casing portion 140. The transmission axle 112 extends through the central gear 142 and is fixedly connected with the central gear 142 in a coaxial manner, such that the central gear 142 is rotationally coupled with the transmission axle 112.
Referring to FIGS. 5 and 7, the torsion spring 144 is assembled in the spring cavity 140A and around the transmission axle 112. The torsion spring 144 can exemplary be a constant force spring having a first or inner end 144A (i.e., disposed radially near the transmission axle 112) and a second or outer end 144B (i.e., disposed radially away from the transmission axle 112). The torsion spring 144 winds around an axle sleeve 152, the first end 144A of the torsion spring 144 being affixed with the axle sleeve 152, and the second end 144B of the torsion spring 144 being affixed with an inner sidewall of the spring cavity 140A of the casing portion 140. Once the torsion spring 144 is assembled in the spring cavity 140A, the spring cavity 140A can be closed by a side cap 149.

The coupling member 146 is assembled around the transmission axle 112 in a coaxial manner, i.e., the coupling member 146 and the transmission axle 112 have a same axis. The coupling member 146 can include the axle sleeve 152 and a gear carrier 154 affixed with each other, the gear carrier 154 having a central hole 156. The axle sleeve 152 is disposed in the spring cavity 140A. The gear carrier 154 is disposed adjacent to the gear cavity 140B of the casing portion 140, and is affixed with the axle sleeve 152 through an opening 160 formed through a sidewall 158 of the spring cavity 140A. The gear carrier 154 and the axle sleeve 152 can be thereby rotationally coupled with each other. Since the first end 144A of the torsion spring 144 is operatively coupled with the gear carrier 154 via its connection to the axle sleeve 152, the first end 144A of the spring 144, the axle sleeve 152 and the gear carrier 154 can move in unison. Moreover, the gear cavity 140B
can further be affixed with a stop collar 162 that is disposed adjacent to the gear carrier 154 for restrictedly positioning the coupling member 146 in the gear cavity 140B.

While the axle sleeve 152 and the gear carrier 154 are illustrated as individual parts affixed with each other, it is worth noting that the axle sleeve 152 and the gear carrier 154 may also be fabricated as an integral piece for forming the coupling member 146.

The gear carrier 154 can include a plurality of shaft portions 154A. The planetary gears 148 are respectively connected pivotally with the gear carrier 154 about the shaft portions 154A, so that the planetary gears 148 can rotate relative to the gear carrier 154. In one embodiment, the gear carrier 154 can be exemplary assembled with four planetary gears 148. It will be appreciated, however, that more or less planetary gears 148 may be suitable. The planetary gears 148 are distributed around the transmission axle 112, and are surrounded by the ring 150. The planetary gears 148 are respectively meshed with the central gear 142 and the teeth 150A of the ring 150. Accordingly, rotation of the transmission axle 112 and the central gear 142 can drive a rotational displacement of the coupling member 146 and the second end 144B of the torsion spring 144 in a same direction via the drive transmission of the planetary gears 148. Moreover, the tooth ratio between the central gear 142 and the teeth 150A of the ring 150 (e.g., the tooth ratio can be equal to 1:4) is such that the rotational displacement of the coupling member 146 and the second end 144B of the torsion spring 144 occurs at a speed slower than that of the transmission axle 112, thereby providing speed reduction.

The assembly of the central gear 142, the planetary gears 148 and the coupling member 146 comprised of the gear carrier 154 and the axle sleeve 152 can form a speed reducer operable to adapt a fixed working range of the torsion spring 144 to a greater displacement range of the bottom part 106, which can solve the problem of insufficient spring length. Once the spring drive unit 116 is assembled, the transmission axle 112 respectively passes through the rotary drum 122, the central gear 142, the axle sleeve 152 and the gear carrier 154 of the coupling member 146, the torsion spring 144 and the casing portions 120 and 140.

Exemplary operation of the window shade 100 and the control system 110 is described hereinafter with reference to FIGS. 1-8. When a user pulls the bottom part 106 downward, the spring force of the spring drive unit 116 can be overcome, and the suspension member 118 can unwind from the winding unit 114, which can drive the rotary drum 122, the transmission axle 112 and the central gear 142 to rotate synchronously. Because the planetary gears 148 are respectively meshed with the central gear 142 and the teeth 150A of the ring 150, the rotation of the transmission axle 112 and the central gear 142 can drive a rotational displacement of the coupling member 146 (including the axle sleeve 152 and the gear carrier 154) and the second end 144B of the torsion spring 144 at a differential speed. More specifically, the unison displacement of the gear carrier 154, the axle sleeve 152 and the torsion spring 144 can occur at a speed slower than the rotation speed of the transmission axle 112 and the central gear 142. For example, when the rotary drum 122, the transmission axle 112 and the central gear 142 rotate multiple turns, the second end 144B of the torsion spring 144 and the coupling member 146 correspondingly rotate only one turn.

When the bottom part 106 has reached a desired position, the user can release the bottom part 106. As a result, the spring force applied by the spring drive unit 116, the suspended weight applied on the suspension members 118, and internal friction forces of the control system 110 can counteract one another to sustain the bottom part 106 in position. In other words, the spring force exerted by the torsion spring 144 in the spring drive unit 116 can assist in keeping the bottom part 106 in position.

When the user pushes the bottom part 106 upward, owing to the connection of the coupling member 146, the planetary gears 148 and the central gear 142, the spring force of the spring drive unit 116 can drive rotation of the transmission axle 112 and the rotary drum 122 for winding the suspension member 118. Moreover, the second end 144B of the torsion spring 144 moves at a speed that is slower than that of the transmission axle 112 and the central gear 142 due to the speed reducer.

The window shade described herein includes a speed reducer that can adapt a fixed working range of a torsion spring to a greater displacement range of a bottom part of the window shade, thereby solving the problem of insufficient spring length. With the speed reducer, a same spring drive unit may be suitable for use with different sizes of window shades. Moreover, the spring drive unit and the winding unit can be connected with each other in close proximity so as to reduce the assembly space.

Realizations of the structures have been described only in the context of particular embodiments. These embodiments are meant to be illustrative and not limiting. Many variations, modifications, additions, and improvements are possible. Accordingly, plural instances may be provided for components described herein as a single instance. Structures and functionality presented as discrete components in the exemplary configurations may be implemented as a combined structure or component. These and other variations, modifications, additions, and improvements may fall within the scope of the claims that follow.

## Claims

1. A control system (110) for a window shade (100), comprising:
a suspension member (118), a rotary drum (122) affixed with the suspension member (118) and rotatable to wind and unwind the suspension member (118), a torsion spring (144) having a first and a second end (144A, 144B) and being operable to bias the rotary drum (122) in rotation for winding the suspension member (118), and a transmission axle (112) disposed through the torsion spring (144), the transmission axle (112) being rotationally coupled with the rotary drum (122), **characterized in that** the control system (110) further comprises:
a first and a second casing portion (120, 140), the rotary drum (122) being pivotally connected with the first casing portion (120), and the second end (144B) of the torsion spring (144) being affixed with the second casing portion (140);
a coupling member (146) affixed with the first end (144A) of the torsion spring (144), the coupling member (146) comprising a gear carrier (154) and an axle sleeve (152) affixed with each other, the torsion spring (144) winding around the axle sleeve (152) with the first end (144A) of the torsion spring (144) affixed with the axle sleeve (152);
a central gear (142) rotationally coupled with the transmission axle (112);
a ring (150) affixed with the second casing portion (140) and having a plurality of teeth (150A); and
a plurality of planetary gears (148) respectively connected pivotally with the gear carrier (154) of the coupling member (146), the planetary gears (148) being respectively meshed with the central gear (142) and the teeth (150A) of the ring (150).

2. The control system (110) according to claim 1, wherein the coupling member (146) is rotatable at a speed slower than that of the rotary drum (122).

3. The control system (110) according to claim 1 or 2, wherein the transmission axle (112) is fixedly connected with the central gear (142) in a coaxial manner.

4. The control system (110) according to claim 1, 2 or 3, wherein the second casing portion (140) has a sidewall (147), and the central gear (142) is pivotally connected with the second casing portion (140) through the sidewall (147).

5. The control system (110) according to any preceding claim, wherein the transmission axle (112) respectively extends through the central gear (142) and the coupling member (146).

6. The control system according to any preceding claim, wherein the gear carrier (154), the axle sleeve (152) and the first end (144A) of the torsion spring (144) are movable in unison at a speed lower than a rotation speed of the transmission axle (112) and the central gear (142).

7. The control system (110) according to any preceding claim, wherein the transmission axle (112) respectively extends through the central gear (142), the gear carrier (154) and the axle sleeve (152).

8. The control system (110) according to any preceding claim, wherein while the transmission axle (112) and the central gear (142) rotate synchronously, the gear carrier (154) and the axle sleeve (152) rotate at a relatively slower speed.

9. The control system (110) according to any preceding claim, wherein the first and second casing portions (120, 140) are adjacent to each other.

10. The control system (110) according to any preceding claim, wherein the second casing portion (140) includes a spring cavity (140A) and a gear cavity (140B), the torsion spring (144) being received in the spring cavity (140A), the central gear (142) and the planetary gears (148) being received in the gear cavity (140B), and the gear cavity (140B) being located between the spring cavity (140A) and the first casing portion (120).

11. The control system (110) according to any preceding claim, wherein the rotary drum (122) has a first and a second side (122A, 122B) opposite to each other, the second side (122B) being located near the central gear (142), the suspension member (118) being affixed with the rotary drum (122) near the first side (122A) and winding around an outer surface (130) of the rotary drum (122) from the second side (122B) toward the first side (122A).

12. A window shade (100) comprising:
a head rail (102), a bottom part (106), and a shading structure (104) disposed between the head rail (102) and the bottom part (106); and
the control system (110) according to any preceding claims, being disposed in the head rail (102), the suspension member (118) of the control system (110) having a first and a second end (118A, 118B) respectively affixed with the rotary drum (122) and the bottom part (106).

13. The window shade (100) according to claim 12, wherein the torsion spring (144) biases the rotary drum (122) in rotation for winding the suspension member (118) when the bottom part (106) rises toward the head rail (102).

14. The window shade (100) according to claim 12 or 13, wherein the torsion spring (144) applies a spring force for assisting in keeping the bottom part (106) stationary at any position below the head rail (102).

## Patentansprüche

1. Steuersystem (110) für eine Jalousie (100), umfassend:
ein Aufhängungselement (118), eine Drehtrommel (122), an der das Aufhängungselement (118) befestigt ist, und die drehbar ist, um das Aufhängungselement (118) aufzuwickeln und abzuwickeln, eine Torsionsfeder (144) mit einem ersten und einem zweiten Ende (144A, 144B) zum drehenden Vorspannen der Drehtrommel (122) zum Wickeln des Aufhängungselements (118), und eine Übertragungsachse (112), angeordnet durch die Torsionsfeder (144) hindurch, wobei die Übertragungsachse (112) drehend mit der Drehtrommel (122) gekoppelt ist, **dadurch gekennzeichnet, dass** das Steuersystem (110) weiter umfasst:
einen ersten und einen zweiten Gehäuseteil (120, 140), wobei die Drehtrommel (122) drehbar gelagert mit dem ersten Gehäuseteil (120) verbunden ist und das zweite Ende (144B) der Torsionsfeder (144) am zweiten Gehäuseteil (140) befestigt ist;
ein Koppelelement (146), an dem das erste Ende (144A) der Torsionsfeder (144) befestigt ist, wobei das Koppelelement (146) einen Zahnradträger (154) und eine Achshülse (152) umfasst, die aneinander befestigt sind, sich die Torsionsfeder (144) um die Achshülse (152) wickelt, wobei das erste Ende (144A) der Torsionsfeder (144) an der Achshülse (152) befestigt ist;
ein Sonnenrad (142), das drehend mit der Übertragungsachse (112) gekoppelt ist;
einen Ring (150), befestigt am zweiten Gehäuseteil (140) und eine Vielzahl von Zähnen (150A) aufweisend; und
eine Vielzahl von Planetenrädern (148), jeweils mit dem Zahnradträger (154) des Koppelelements (146) drehbar gelagert verbunden, wobei die Planetenräder (148) jeweils in das Sonnenrad (142) und die Zähne (150A) des Rings (150) eingreifen.

2. Steuersystem (110) nach Anspruch 1, wobei das Koppelelement (146) mit einer niedrigeren Drehzahl drehbar ist als derjenigen der Drehtrommel (122).

3. Steuersystem (110) nach Anspruch 1 oder 2, wobei die Übertragungsachse (112) koaxial mit dem Sonnenrad (142) fest verbunden ist.

4. Steuersystem (110) nach Anspruch 1, 2 oder 3, wobei der zweite Gehäuseteil (140) eine Seitenwand (147) aufweist und das Sonnenrad (142) mit dem zweiten Gehäuseteil (140) über die Seitenwand (147) drehbar gelagert verbunden ist.

5. Steuersystem (110) nach einem beliebigen vorangehenden Anspruch, wobei sich die Übertragungsachse (112) jeweils durch das Sonnenrad (142) und das Koppelelement (146) erstreckt.

6. Steuersystem (110) nach einem beliebigen vorangehenden Anspruch, wobei der Zahnradträger (154), die Achshülse (152) und das erste Ende (144A) der Torsionsfeder (144) im Einklang mit einer niedrigeren Drehzahl beweglich sind als einer Drehzahl der Übertragungsachse (112) und des Sonnenrads (142).

7. Steuersystem (110) nach einem beliebigen vorangehenden Anspruch, wobei sich die Übertragungsachse (112) jeweils durch das Sonnenrad (142), den Zahnradträger (154) und die Achshülse (152) erstreckt.

8. Steuersystem (110) nach einem beliebigen vorangehenden Anspruch, wobei, während sich die Übertragungsachse (112) und das Sonnenrad (142) synchron drehen, sich der Zahnradträger (154) und die Achshülse (152) mit einer relativ niedrigeren Drehzahl drehen.

9. Steuersystem (110) nach einem beliebigen vorangehenden Anspruch, wobei der erste und der zweite Gehäuseteil (120, 140) einander benachbart sind.

10. Steuersystem (110) nach einem beliebigen vorangehenden Anspruch, wobei der zweite Gehäuseteil (140) einen Federhohlraum (140A) und einen Getriebehohlraum (140B) enthält, die Torsionsfeder (144) im Federhohlraum (140A) untergebracht ist, das Sonnenrad (142) und die Planetenräder (148) im Getriebehohlraum (140B) untergebracht sind, und sich der Getriebehohlraum (140B) zwischen dem Federhohlraum (140A) und dem ersten Gehäuseteil (120) befindet.

11. Steuersystem (110) nach einem beliebigen vorangehenden Anspruch, wobei die Drehtrommel (122) eine erste und eine zweite Seite (122A, 122B) einander gegenüber aufweist, sich die zweite Seite (122B) nahe dem Sonnenrad (142) befindet, das Aufhängungselement (118) an der Drehtrommel (122) nahe der ersten Seite (122A) befestigt ist und sich von der zweiten Seite (122B) zur ersten Seite (122A) um eine Außenfläche (130) der Drehtrommel (122) wickelt.

12. Jalousie (100), umfassend:
eine Kopfschiene (102), ein Unterteil (106), und eine Beschattungsstruktur (104), angeordnet zwischen der Kopfschiene (102) und dem Unterteil (106); und
das Steuersystem (110) nach beliebigen vorangehenden Ansprüchen, angeordnet in der Kopfschiene (102), wobei das Aufhängungselement (118) des Steuersystems (110) ein erstes und ein zweites Ende (118A, 118B) aufweist, die jeweils an der Drehtrommel (122) und dem Unterteil (106) befestigt sind.

13. Jalousie (100) nach Anspruch 12, wobei die Torsionsfeder (144) die Drehtrommel (122) zum Wickeln des Aufhängungselements (118) drehend vorspannt, wenn sich das Unterteil (106) zur Kopfschiene (102) hin hebt.

14. Jalousie (100) nach Anspruch 12 oder 13, wobei die Torsionsfeder (144) eine Federkraft ausübt, um zu unterstützen, das Unterteil (106) in einer beliebigen Position unterhalb der Kopfschiene (102) ortsfest zu halten.

## Revendications

1. Système de commande (110) pour un store de fenêtre (100), comprenant :
un élément de suspension (118), un cylindre rotatif (122) fixé à l'élément de suspension (118) et pouvant tourner pour enrouler et dérouler l'élément de suspension (118), un ressort de torsion (144) comprenant une première et une deuxième extrémité (144A, 144B) et pouvant être utilisé pour précontraindre le cylindre rotatif (122) en rotation pour l'enroulement de l'élément de suspension (118), et un axe de transmission (112) disposé à travers le ressort de torsion (144), l'axe de transmission (112) étant couplée en rotation au cylindre rotatif (122), **caractérisé en ce que** le système de commande (110) comprend en outre :
une première et une deuxième portion de boîtier (120, 140), le cylindre rotatif (122) étant relié en pivotement à la première portion de boîtier (120) et la deuxième extrémité (144B) du ressort de torsion (144) étant fixée à la deuxième portion de boîtier (140) ;
un élément de couplage (146) fixé à la première extrémité (144A) du ressort de torsion (144), l'élément de couplage (146) comprenant un porte-pignons (154) et un manchon d'axe (152) fixés l'un à l'autre, le ressort de torsion (144) s'enroulant autour du manchon d'axe (152) avec la première extrémité (144A) du ressort de torsion (144) fixée au manchon d'axe (152) ;
un pignon central (142) couplé en rotation à l'axe de transmission (112) ;
une couronne (150) fixée à la deuxième portion de boîtier (140) et comprenant une pluralité de dents (150A) ; et une pluralité de pignons planétaires (148) respectivement reliés en rotation au porte-pignons (154) de l'élément de couplage (146), les pignons planétaires (148) étant respectivement engrenés avec le pignon central (142) et les dents (150A) de la couronne (150).

2. Système de commande (110) selon la revendication 1, l'élément de couplage (146) pouvant tourner à une vitesse inférieure à celle du cylindre rotatif (122).

3. Système de commande (110) selon la revendication 1 ou 2, l'axe de transmission (112) étant relié à demeure au pignon central (142) d'une manière coaxiale.

4. Système de commande (110) selon la revendication 1, 2 ou 3, la deuxième portion de boîtier (140) possédant une paroi latérale (147) et le pignon central (142) étant relié en pivotement à la deuxième portion de boîtier (140) à travers la paroi latérale (147) .

5. Système de commande (110) selon l'une quelconque des revendications précédentes, l'axe de transmission (112) s'étendant respectivement à travers le pignon central (142) et l'élément de couplage (146).

6. Système de commande selon l'une quelconque des revendications précédentes, le porte-pignons (154), le manchon d'axe (152) et la première extrémité (144A) du ressort de torsion (144) pouvant se déplacer à l'unisson à une vitesse inférieure à une vitesse de rotation de l'axe de transmission (112) et du pignon central (142) .

7. Système de commande (110) selon l'une quelconque des revendications précédentes, l'axe de transmission (112) s'étendant respectivement à travers le pignon central (142), le porte-pignons (154) et le manchon d'axe (152).

8. Système de commande (110) selon l'une quelconque des revendications précédentes, le porte-pignons (154) et le manchon d'axe (152) tournant à une vitesse relativement plus lente pendant que l'axe de transmission (112) et le pignon central (142) sont en rotation synchrone.

9. Système de commande (110) selon l'une quelconque des revendications précédentes, les première et deuxième portions de boîtier (120, 140) étant adjacentes l'une à l'autre.

10. Système de commande (110) selon l'une quelconque des revendications précédentes, la deuxième portion de boîtier (140) comprenant une cavité à ressort (140A) et une cavité à pignon (140B), le ressort de torsion (144) étant accueilli dans la cavité à ressort (140A), le pignon central (142) et les pignons planétaires (148) étant accueillis dans la cavité à pignon (140B) et la cavité à pignon (140B) étant située entre la cavité à ressort (140A) et la première portion de boîtier (120).

11. Système de commande (110) selon l'une quelconque des revendications précédentes, le cylindre rotatif (122) possédant un premier et un deuxième côté (122A, 122B) opposés l'un à l'autre, le deuxième côté (122B) étant situé à proximité du pignon central (142), l'élément de suspension (118) étant fixé au cylindre rotatif (122) à proximité du premier côté (122A) et s'enroulant autour d'une surface extérieure (130) du cylindre rotatif (122) du deuxième côté (122B) vers le premier côté (122A).

12. Store de fenêtre (100) comprenant :
un rail supérieur (102), une partie inférieure (106) et une structure de protection solaire (104) disposée
entre le rail supérieur (102) et la partie inférieure (106) ; et
le système de commande (110) selon l'une quelconque des revendications précédentes, disposé dans
le rail supérieur (102), l'élément de suspension (118) du système de commande
(110) possédant une première et une deuxième extrémité (118A, 118B) respectivement fixées
au cylindre rotatif (122) et à la partie inférieure (106).

13. Store de fenêtre (100) selon la revendication 12, le ressort de torsion (144) exerçant une précontrainte sur le cylindre rotatif (122) en rotation pour enrouler l'élément de suspension (118) lorsque la partie inférieure (106) se lève en direction du rail supérieur (102).

14. Store de fenêtre (100) selon la revendication 12 ou 13, le ressort de torsion (144) appliquant une force de ressort pour assister au maintien de la partie inférieure (106) fixe à toute position au-dessous du rail supérieur (102).
